# EUROPÄISCHE PATENTSCHRIFT

(11) **EP 1 337 029 B1**
(45) Veröffentlichungstag und Bekanntmachung des Hinweises auf die Patenterteilung: **16.04.2008**
(21) Anmeldenummer: 03100365.0
(22) Anmeldetag: 17.02.2003
(51) Int. Cl.: H02K 9/04, H02K 5/20

(54) **Schutz- und Verbindungs-Haube in einer Kühlanordnung für eine elektrische Maschine**
Protection and connection flange for a cooling arrangement in an electrical machine
Capot de protection et de connection dans un dispositif de refroidissement pour une machine électrique

(30) Priorität: 19.02.2002 DE 10206996
(43) Veröffentlichungstag der Anmeldung: 20.08.2003
(73) Patentinhaber: BAUMÜLLER NÜRNBERG GMBH, D-90482 Nürnberg (DE)
(72) Erfinder: Sonnauer, Günter, 90419, Nürnberg (DE); Gutjahr, Frank, 91220, Schnaittach (DE)
(74) Vertreter: Götz, Georg Alois

(56) Entgegenhaltungen:
- US-A- 3 819 965

## Beschreibung

Die Erfindung betrifft eine Schutz- und Verbindungshaube für eine Kühlanordnung für eine elektrische Maschine mit Fremdbelüftung durch einen extern angeordneten, motorischen Lüfter gemäß Oberbegriff des Patentanspruchs 1.

Eine Fremdbelüftung eines Elektromotors ist aus Böhm, Werner: Elektrische Antriebe, 4. Auflage, Würzburg: Vogel, 1996, dortige Seite 24, bekannt. Der danach einzusetzende Radiallüfter ist im Bereich eines Motor-Lagerschildes an das Motorgehäuse von außen radial angebracht und mit dem Motorinneren zu dessen Belüftung in Verbindung gesetzt. Die Kühlluft wird dabei vom Radiallüfter in das Motorinnere radial eingeblasen, wo mittels Umleitbleche oder dergleichen eine Umlenkung des Kühlluftstroms in axiale oder achsparallele Richtungen erfolgt. Bei dieser vorbekannten Ausführung muß das Motorgehäuse mit Lufteinlässen in radialer Richtung im Bereich des Lagerschildes versehen sein. Infolgedessen ist dabei der Einsatz eines Radialgebläses fest vorgegeben.

In DE 32 40 315 A1 ist eine Lichtmaschine mit Motorlüfter für ein Kraftfahrzeug beschrieben. Vom Motorlüfter wird ein Luftstrom erzeugt, der über einen Auslaßstutzen durch ein Rohr und von dort aus über einen Einlaßstutzen und ein nachfolgendes Führungsteil in das Innere der Lichtmaschine strömt, um schließlich von dort durch einen durchbrochenen Rückflansch auszuströmen. Es wird eine weitere Ausführungsform mit kompakterer Konstruktion vorgeschlagen, bei welcher das genannte Rohr zwischen dem Motorlüfter und dem Führungsteil weggelassen wird.

US 3 819 965 zeigt eine elektrische Maschine, die von einem Lüfter aus gekühlt wird. Der im Lüfter erzeugte Luftstrom wird zunächst in radialer Richtung in eine Luftkammer geblasen, die stirnseitig am Lagerschild der elektrischen Maschine befestigt ist. Das Lagerschild ist mit Durchbrüchen versehen, durch welche der Luftstrom sich achsparallel in das Innere der elektrischen Maschine ausbreiten und dort am anderen Lagerschild wieder austreten kann. Die Luftkammer ist von einer Wandung gegenüber der Außenumgebung abgegrenzt, und die Wandung besitzt einen seitlichen Eingang für den Eintritt des Luftstroms vom Lüfter in radialer Richtung.

US 6 300 694 B1 beschreibt ein Flügel-Lüfterrad für einen Elektromotor. Dessen im Bereich des Lagerschilds angeordneter Luftauslaß kommuniziert mit dem Inneren einer Schutzhaube, welche vom Elektromotor achsparallel vorspringt. Darin ist ein weiterer Motor zum Antrieb des Lüfterrads angeordnet. Letzteres saugt Kühlluft aus dem Inneren des ersten Motors durch die Schutzhaube hindurch und bläst sie durch den stirnseitigen Haubenausgang in die Außenumgebung. Dazu ist die Schutzhaube mit einer nach außen offenen Stirnseite gestaltet.

DE 81 30 338 U1 beschreibt einen Elektromotor mit als Radiallüfter aufgebautem Fremdlüfter, der über eine Lüfterhaube an eine Stirnseite bzw. ein Lagerschild des Elektromotors angeflanscht ist. Der koaxial zum Hauptmotor angeordnete Fremdlüfter sitzt ferner auf der Welle eines Lüftermotors, der an die noch freie Stirnseite der Lüfterhaube ebenfalls angeflanscht ist. Im Betrieb saugt der Fremdlüfter einen Kühlluftstrom durch Auslässe aus dem Hauptmotor. Nach dessen Verlassen wird der Kühlluftstrom durch ein an der Lüfterhaube angebrachtes Leitblech geleitet. Hinter dem Fremdlüfter innerhalb der Schutzhaube tritt der Kühlluftstrom durch ein Luftgitter in Radialrichtung aus der Lüfterhaube ins Freie.

DE 43 20 559 A1 beschreibt eine elektrische Maschine mit einem innengekühlten Läufer. An einem achsparallelen Überstand eines Lagerschilds ist ein Lüfter-Gehäuse angebaut, der einen Zwischenraum zwischen dem Lagerschild und dem Radiallüfter umgibt bzw. begrenzt. Mit seiner Ansaugöffnung steht der Radiallüfter mit dem Zwischenraum in Saugverbindung. Aus dem Inneren der elektrischen Maschine wird Luft durch deren Lagerschild in die Ansaugöffnung gesaugt und DE 43 11 267 beschreibt einen Positionsgeber zur Überwachung der Radialwinkelstellung oder der Winkelgeschwindigkeit oder der Drehrichtung einer elektromotorisch angetriebenen Welle. An der Stirnseite bzw. Lagerschild des Elektromotors ist für den dort angebrachten Positionsgeber ein Zusatzgehäuse vorgesehen, welches stirnseitig mit einem Abschlußdeckel verschlossen ist. Irgendwelche Kühleinrichtungen sind nicht angesprochen.

In DE 41 15 471 A1 ist im Rahmen einer elektrisch betriebenen Küchenmaschine eine Kühlanordnung und eine Schutz- und Verbindungs-Haube jeweils der eingangs genannten Art offenbart. Der Elektromotor und ein Lüfterrad sind in einem Luftleitkanal angeordnet, der an seinem einen Ende einen Lufteinlaß und an seinem anderen Ende einen Luftauslaß bildet. Ein Lagerschild des Elektromotors ist mit Luftaustrittsöffnungen versehen. Von dieser Stelle aus krümmt sich der Luftleitkanal mit kreisförmigem Querschnitt derart, dass sich insgesamt, einschließlich der Luftströmung im Motorinneren, ein U-förmiger Verlauf des Luftleitkanals 4 ergibt. In der Kammer, die von dem vom Motor freien Schenkel des Luftleitkanals gebildet wird, ist eine kegelförmige Trennwand angeordnet, die dafür sorgt, dass der vom Elektromotor ausgehende, kreisförmige Querschnitt des Luftleitkanals in einen kreisringförmigen Querschnitt übergeht. Es entsteht so eine Ringkammer, die einen im Querschnitt kreisförmigen Freiraum zur Aufnahme des Lüftermotors einschließt. Im Abstand von der kegelförmigen Trennwand sind an der Wandung des Luftleitkanals radial nach innen sich erstreckende Haltearme ausgebildet, die von Luftdurchlässen durchsetzt sind. Die Haltearme enden radial innen an einer Ringhülse, in welcher der Lüftermotor gehalten wird. Aus diesem ragt eine Welle für das Lüfterrad vor.

Dem gegenüber liegt der Erfindung die Aufgabe zugrunde eine Schutz- und Verbindungshaube für eine Kühlanordnung für eine elektrische Maschine zu schaffen, wobei die Kühlanordnung sich mit hoher Flexibilität von einem auf ein anderes Kühlsystem beispielsweise von radial auf axial, umstellen läßt. Ferner soll sich die Kühlanordnung mit der Schutz- und Verbindungshaube durch eine erhöhte Wartungs- und Montagefreundlichkeit auszeichnen.

Zur Lösung dieser Aufgabe wird auf die in Patentanspruch 1 angegebene Schutz-und Verbindungshaube zum Einsatz in Kühlanordnungen elektrischer Maschinen verwiesen. Vorteilhafte Ausgestaltungen der Erfindung ergeben sich aus einem oder mehreren der Merkmale der abhängigen Ansprüche.

Mit dem Einsatz der erfindungsgemäßen Schutz- und Verbindungshaube ergibt sich eine Kühlanordnung für eine elektrische Maschine mit Fremdbelüftung durch einen extern angeordneten, motorischen Lüfter, der über einen Ein- oder Ausgang für Kühlluft mit der Maschine derart in Verbindung steht, dass bei Lüfterbetrieb ein Kühlluftstrom in der Maschine zwischen einer ersten und einer zweiten Maschinen-Stimseite entsteht, wobei sich diese Kühlanordnung noch durch folgende Merkmale auszeichnet:
a) im Bereich oder in der Nachbarschaft der ersten Stirnseite sind ein oder mehrere, erste Luftdurchlässe für den Kühlluftstrom ausgebildet,
b) an der zweiten Maschinen-Stirnseite sind ein oder mehrere zweite Luftdurchlässe für den Kühlluftstrom ausgebildet,
c) an der zweiten Maschinen-Stirnseite ist eine Schutz- und Verbindungs-Haube befestigt,
d) die Schutz- und Verbindungs-Haube weist einen Durch- oder Umleitungskanal auf,
e) an die zweiten Luftdurchlässe der zweiten Maschinen-Stirnseite ist dieser Kanal angeschlossenen,
f) der Lüfter ist mit seinem Ein- oder Ausgang an eine Lüfter-Öffnung des Durch- oder Umleitungskanals so angeschlossen, dass sich darüber der Kühlluftstrom aus der Maschine zum Lüfter fortsetzt,
g) der Durch- oder Umleitungskanal ist innerhalb einer Wandung der Schutz- und Verbindungs-Haube ganz oder teilweise ringartig verlaufend ausgebildet,
h) die Schutz- und Verbindungs-Haube umgibt mit einer Innenwand einen Innenraum zur Aufnahme von Maschinenzubehör- oder Funktionsteilen,
i) der Innenraum ist durch die Innenwand gegenüber dem Umleitungskanal abgeschlossen,
j) der Durch- oder Umleitungskanal verläuft ringartig um eine gedachte Verlängerung einer Drehachse der Maschine,
k) der ringartig verlaufende Durch- oder Umleitungskanal weist eine oder mehrere stirnseitige Luftöffnungen auf,
l) und die Haube ist derart an die zweite Maschinen-Stimseite angeschlossen ist, dass die eine oder mehreren stirnseitigen Luftöffnungen des Durch- oder Umleitungskanals mit dem oder den zweiten Luftdurchlässen der zweiten Maschinen-Stimseite verbunden sind.

Im Rahmen der Erfindung ist es zweckmäßig, dass die Befestigungsmittel Bohrungen umfassen, die sich von einer freien Haubenstimseite bis zur gegenüberliegenden, der Anbringung an die Maschine dienenden Haubenstimseite erstrecken. Die Befestigungsmittel bzw. die Bohrungen fluchten bzw. ergänzen sich dann mit Befestigungs-Bohrungen oder sonstigen Befestigungsmitteln der zweiten Maschinen-Stirnseite.

Ferner ist es zweckmäßig, dass bezüglich einer Maschinen-Drehachse oder einer sonstigen Mittelachse der Kühlluftstrom zwischen der zweiten Maschinen-Stimseite und dem Umleitungskanal im Wesentlichen axial oder achsparallel und zwischen dem Umleitungskanal und dem Lüfter-Ein- oder -Ausgang im Wesentlichen radial geleitet ist.

Aus Vorstehendem ergibt sich, dass die erfindungsgemäße Haube zum Einsatz in der genannten Kühl-Anordnung ausgebildet ist.

Erfindungsgemäß wird also dem im Maschinen-Innenraum stattfindenden Kühlluftstrom zwischen den beiden Maschinen-Stirnseiten einerseits und der externen Luftquelle oder -senke im Lüfter andererseits eine Schutz- und Verbindungs-Haube zwischengeschaltet, die zweckmäßig als separate Baueinheit hergestellt und derart ausgebildet ist, dass sie an eine Stirnseite der Maschine vorzugsweise lösbar befestigbar ist. Integraler Bestandteil der Schutz- und Verbindungs-Haube ist ein darin ausgebildeter Kühlluft-Umleitungs- oder Durchleitungskanal, der sowohl mit dem Lüfter-Ein- oder Ausgang als auch mit dem Kühlluft-Strom im Motorinneren in Verbindung steht.

Mit dem Einsatz der erfindungsgemäßen Schutz- und Verbindungs-Haube wird eine modulare Bauweise gefördert. Das Modul "Verbindungs-Haube" läßt sich an beliebige elektrische Maschinen, soweit diese auch in einer zweiten Stirnseite Luftdurchlässe aufweisen, anbringen, wobei sich die Anbringung leicht manuell lösbar ausbilden läßt. Dabei kann die Verbindungs-Haube je nach Anwender-Anforderung entweder für Axial- oder Radiallüfterbetrieb ausgelegt sein. Wird bei einer elektrischen Maschine die Umstellung von einer auf die andere Lüfter-Betriebsart gewünscht, läßt sich dies aufgrund des erfindungsgemäßen Konzepts mit dem Modul Verbindungs-Haube" leicht dadurch bewerkstelligen, dass eine zum Anschluß von Radiallüftern ausgebildete Verbindungs-Haube durch eine zum Anschluß von Axiallüftern ausgebildete Verbindungs-Haube ersetzt wird. In dieser Hinsicht besteht ein mit der Erfindung erzielbarer Vorteil darin, dass sich die Verbindungs-Haube bei der manuell lösbaren Befestigungsweise schnell ab- und anmontieren läßt, wobei eine rasche Umstellung erzielbar ist.

Verbindungs-Haube bei der manuell lösbaren Befestigungsweise schnell ab- und anmontieren läßt, wobei eine rasche Umstellung erzielbar ist.

Gemäß Erfindung kann die Verbindungs-Haube auch Schutzfunktionen für Zubehör- oder Funktionsteile, beispielsweise für Lagegeber, Resolver oder sonstige Sensorik, übernehmen. Dazu ist die Haube mit einem Innenraum gestaltet, der wenigstens an einer der Maschine abgewandten Haubenseite oder Haubenwandung offen sein kann und jedenfalls gegenüber dem Um- oder Durchleitungskanal abgeschlossen ist. Dadurch ist auch während des laufenden Maschinenbetriebs stets ein manueller Zugriff auf die im Innenraum untergebrachten Zubehör- oder Funktionsteile zu Kontroll-, Wartungs- und Reparaturzwecken gegeben. Zudem sind die Zubehör- und Funktionsteile durch die sie umgebende Haubenwandung (welche den Innenraum definiert) gegen äußere Einwirkungen, beispielsweise mechanische Stöße, abgeschirmt und geschützt.

Mit besonderem Vorteil erstreckt sich der Innenraum der Haube direkt bis zur Wandung der zweiten Maschinen-Stirnseite, woran die Haube befestigt ist. So ist es möglich, beispielsweise einen Drehgeber oder Resolver leicht anzubringen oder von der Maschine zu entfernen, ohne dass gleichzeitig das Lüftersystem abmontiert werden müßte. Insgesamt ergibt sich also der Vorteil, dass mit der Maschine gekoppelte Zubehör- oder Funktionsteile, insbesondere mit den Maschinen-Bewegungen gekoppelte Lagegeber, für eine Wartungsperson sogar während des laufenden Lüftungsbetriebs leicht zugreifbar, handhabbar und auch austauschbar oder reparierbar sind.

Zur Bildung des Innenraums und auch im Hinblick auf eine Montage-Kompatibilität mit einer zumindest teilweise rotationssymmetrischen Bauweise der elektrischen Maschine ist es zweckmäßig, die Haube mit einer ganz oder teilweise hohlzylindrischen Grundform zu gestalten. Innerhalb der Hauben- bzw. Zylinderwandung kann dann der Umleitungskanal eine ganz oder teilweise ringartige und/oder kreisartige Form aufweisen, die sich um die Zylinderachse oder eine gedachte Verlängerung der Maschinendrehachse ganz oder teilweise erstreckt. Zur Verbindung mit dem Kühlluftstrom der Maschine sind in dem Ringkanal innerhalb der Hauben- bzw. Zylinderwandung stirnseitig eine oder mehrere Luftöffnungen ausgebildet, welche in Verbindung mit den zweiten Luftdurchlässen der zweiten Maschinen-Stirnseite eine strömungstechnische Kopplung bis zur Lüfter-Öffnung des Durch- oder Umleitungskanals direkt zum Lüfter ergeben.

Die oben angesprochene, vorteilhaft anzustrebende freie Zugänglichkeit eines Hauben-Innenraums, abgetrennt vom Umleitungskanal, läßt sich dann besonders zweckmäßig realisieren, wenn gemäß einer Erfindungsausbildung ein Radiallüfter verwendet wird, dessen Ein- oder Ausgang bezüglich einer Hauben-Mittelachse oder Maschinen-Drehachse zur Erzeugung eines radialen Kühlluftstromes ausgerichtet ist. Dann kann der Hauben-Innenraum von der freien Stirn- bzw. Rückseite her für Wartungsarbeiten gegebenenfalls bis direkt an die Maschinen-Stirnseite (zu der der Innenraum zweckmäßig durchgeht) frei zugänglich bleiben.

Eine zweckmäßige Konkretisierung der Gestaltung der erfindungsgemäßen Schutz- und Verbindungs-Haube besteht darin, diese als zur Gestalt der elektrischen Maschine kompatiblen Ringkanal auszubilden, der eine radiale Öffnung zum Lüfteraggregat und wenigstens eine axiale Öffnung zur Stirnseite, insbesondere Lagerschild, der elektrischen Maschine besitzt. Die Innenwandung des Hauben-Ringkanals umgibt dann den oben angesprochenen Innenraum, worin Zubehör- oder Funktionsteile für die elektrische Maschine (oder auch für den Lüfter) schützend untergebracht sein können. Zudem wird dadurch ein in sich geschützter Durchgang zum Maschinen-Lagerschild der Maschinenstirnseite geschaffen.

Gemäß einer besonders vorteilhaften Ausbildung ist die stirnseitige Öffnung des Umleitungskanals, insbesondere mit der Kontur oder den Querschnitt eines stirnseitig offenen Ringkanals, mit einer oder mehreren Streben stabilisiert, welche sich vorzugsweise radial durch den Kanalquerschnitt von der inneren zur äußeren Kanalwandung erstrecken. Mit den Stabilisierungs-Streben ist der Weg zu einer weiteren vorteilhaften Ausbildung eröffnet, dass nämlich die Streben gleichzeitig die Funktion von Trägern für Befestigungsmittel übernehmen können. Solche können konkret als vorzugsweise verschraubbare (Innengewinde-) Bohrungen realisiert sein, die den Grundkörper der Haube von einer Stirnseite zur gegenüberliegenden vorzugsweise achsparallel und bei der genannten Ausbildung zumindest teilweise in den Streben durchsetzen.

Weitere Merkmale, Einzelheiten, Vorteile und Wirkungen auf der Basis der Erfindung ergeben sich aus der nachfolgenden Beschreibung eines bevorzugten Ausführungsbeispiels der allgemeinen erfinderischen Idee sowie aus den Zeichnungen. Diese zeigen in:
- Figur 1: in teilweise axial geschnittener Längsansicht ein Ausführungsbeispiel der erfindungsgemäßen Kühlanordnung mit elektrischer Maschine, Schutz- und Verbindungs-Haube und Radiallüfter,
- Figur 2: eine teilweise radial geschnittene Stirnansicht auf die Belüftungsseite des B-Lagerschilds der elektrischen Maschine,
- Figur 3: eine in radialer Richtung vorgenommene Seitenansicht auf das Lagerschild gemäß Figur 2, teilweise geschnitten gemäß Linie C-D in Figur 4,
- Figur 4: eine teilweise radial geschnittene Stirnansicht auf die Motorseite des B-Lagerschilds gemäß Figuren 2 und 3,
- Figuren 5-7: diverse Teilschnitt-Ansichten gemäß Linien J-K, G-H und L-M,
- Figur 8: eine axial gerichtete Ansicht auf die von der elektrischen Maschine abgewandten Stirn- bzw. Rückseite der erfindungsgemäßen Schutz- und Verbindungs-Haube,
- Figur 9: eine axial geschnittene, radial ausgerichtete Seitenansicht auf die Haube gemäß Figur 8,
- Figur 10: eine axial gerichtete Ansicht auf die der elektrischen Maschine zugeordneten Stirnseite der Haube gemäß Figuren 8 und 9 und
- Figur 11: eine Draufsicht auf einen Abschnitt der Hauben-Umfangswandung mit einer Öffnung in den Umleitungskanal.

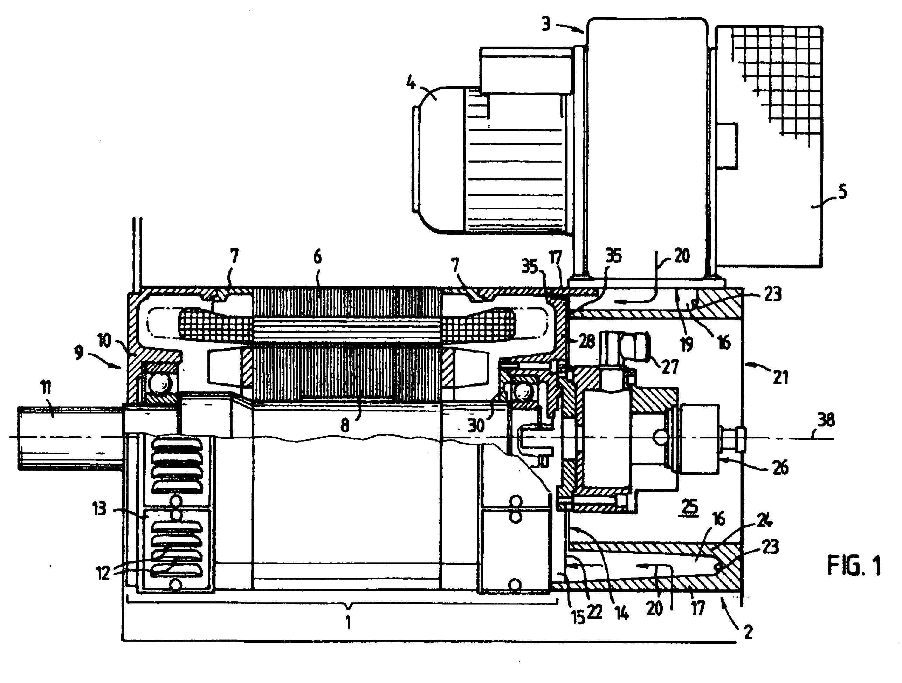

Gemäß Figur 1 besteht die für die Erfindung beispielhafte Kühlanordnung aus der strömungstechnischen Hintereinanderschaltung einer elektrischen Maschine 1, der Schutz- und Verbindungs-Haube 2 und des Radiallüfters 3 mit Lüftermotor 4 und Luftfilter 5. Der eingesetzte Radiallüfter 3 ist an sich bekannt, so dass auf eine detaillierte Erläuterung verzichtet werden kann. Die elektrische Maschine 1 (Elektromotor mit Stator-Blechpaket 6, zusammengehalten von Druckringen 7, sowie mit Rotor-Blechpaket 8) ist aufgrund der Fremdbelüftung durch den Radiallüfter 3 über die Schutz- und Verbindungs-Haube 4 einer Durchzugsbelüftung ausgesetzt, die, wie an sich bekannt und deshalb nicht gezeichnet, mit achsparallelen Kanälen im Maschineninneren realisiert sein kann (entsprechend Schutzarten IP23-54). Der im Inneren der Maschine erzeugte Kühlluftstrom tritt im Bereich einer ersten Maschinen-Stirnseite 9 mit A-Lagerschild 10 und Abtriebswelle 11 durch Austrittsöffnungen 12 eines seitlich angebrachten Kiemenbleches 13 aus.

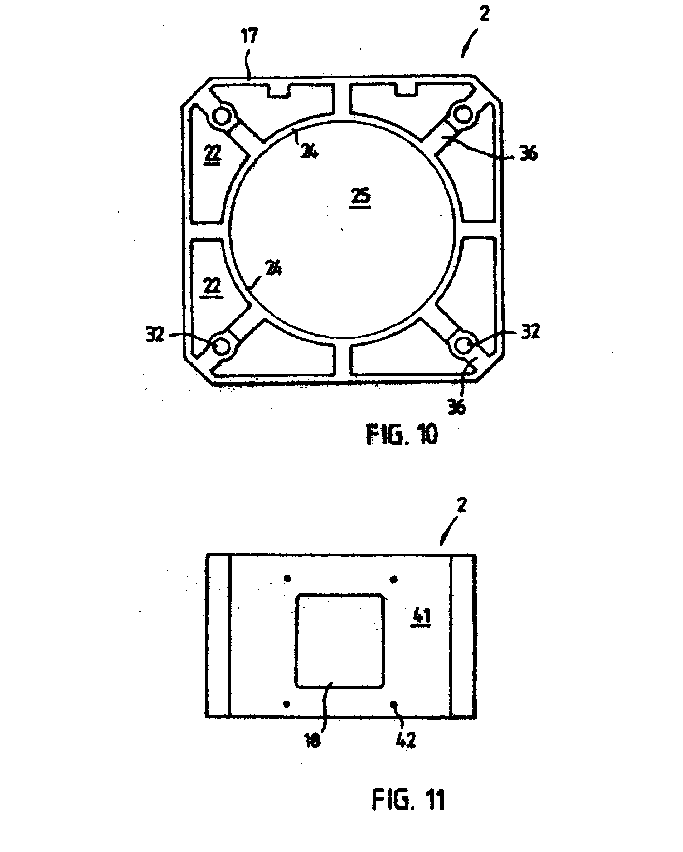

Erfindungsgemäß sind an der zweiten Maschinen-Stirnseite 14 zweite Luftdurchlässe 15 ausgebildet, über welche der vom Radiallüfter 3 erzeugte Kühlluftstrom aus dem Ringkanal 16 der Haube 2 in das Innere der Maschine 1 gelangt. Der Außenmantel 17 der Haube 2 bzw. des Ringkanals 16, welcher dessen Außenwandung bildet, ist an einer Stelle oder einem Umfangsabschnitt von einer Aussparung 18 (vgl. Figur 11) durchbrochen, welche eine seitliche oder radiale Lüfter-Öffnung 19 zum direkt anschließenden Ausgang des Radiallüfters 3 bildet. Daraus gelangt der Kühlluftstrom 20 zunächst radial in den Ringkanal 16 und wird darin in eine axiale Richtung zur zweiten Maschinen-Stirnseite 14 und dessen Luftdurchlässe 15 umgeleitet. Der Kühlluftstrom setzt sich dann im Maschineninneren fort bis zu den ersten Luftdurchlässen bzw. Austrittsöffnungen 12 des Kiemenblechs 13 im Bereich der ersten Maschinenstirnseite 9 (Kühlluftstrom im Maschineninneren nicht gezeichnet). Die Umleitung des Kühlluftstroms 20 wird durch die sacklochartige Ausbildung des Ringkanals 16 unterstützt, indem dieser zur freien, rückwärtigen Haubenstirnseite 21 hin geschlossen ist und zur zweiten Maschinen-Stirnseite 14 hin mit einer stirnseitigen ringförmigen Luftöffnung 22 gestaltet ist. Die vom Radiallüfter radial eingeblasene Kühlluft staut sich am Sacklochboden 23 des Ringkanals 16. Der Staudruck führt dann zu einem Druck, der die Kühlluftströmung durch die stirnseitige Luftöffnung 22 der Haube 2 und durch die Luftdurchlässe 15 in der zweiten Maschinen-Stirnseite 14 auslöst.

Gemäß Figur 1 umgibt bei der Haube 2 die Innenwandung 24 des Ringkanals 16 etwa hohlzylindrisch einen Innenraum 25. Darin befindet sich ein Dreh- und Winkellage-Gebersystem 26 (beispielsweise Resolver) mit einer zur rückwärtigen Haubenstimseite 21 ausgerichteten Geber-Anschlußdose 27. Auf letztere kann durch die frei offene, rückwärtige Haubenstirnseite 21 zu Wartungs- und Anschlußzwecken manuell frei zugegriffen werden, selbst wenn der Radiallüfter 3 in Betrieb ist. Gegebenenfalls kann der ganze Geber 26 aus dem Innenraum 25 demontiert werden, wobei auch ein Zugriff bis zur zweiten Maschinen-Stirnseite 14 aufgrund des freien Innenraums 25 der Haube 2 möglich ist. So läßt sich beispielsweise ein Ersatz-Geber mit der Drehachse bzw. Abtriebswelle 11 der elektrischen Maschine innerhalb des Innenraums 25 durch Montage-Handhabung einer Wartungsperson koppeln.

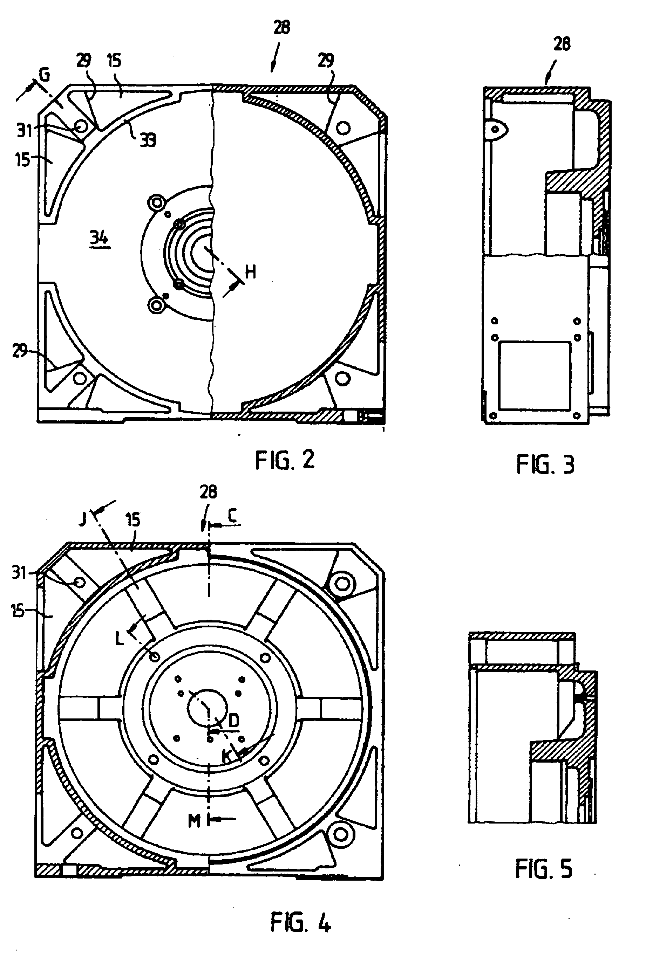

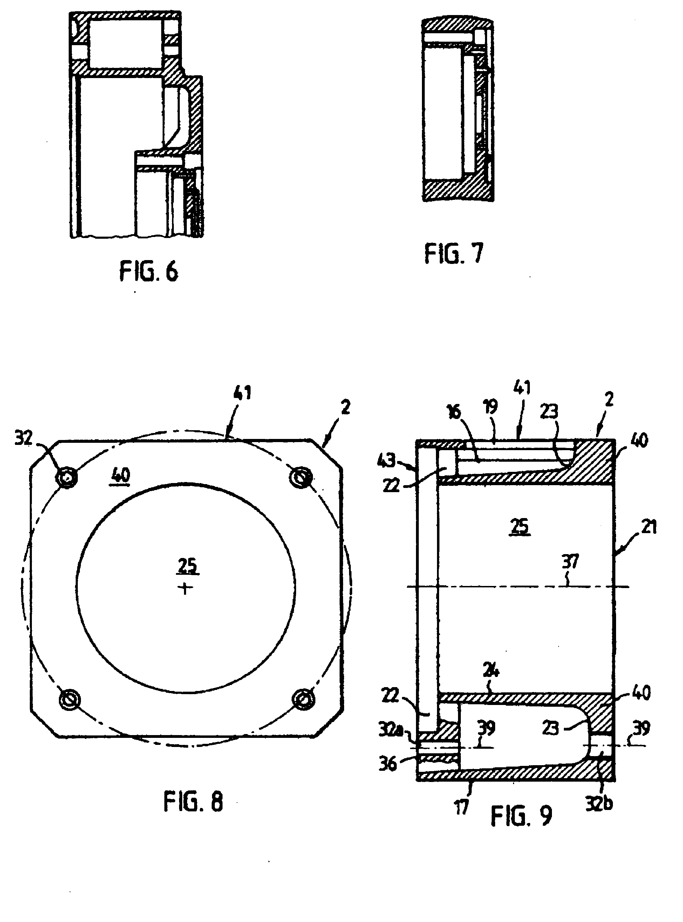

Gemäß Figuren 2-4 weist das dort gezeichnete B-Lagerschild 28 in den Eckbereichen seines viereckigen Umrisses je zwei Luftdurchlässe 15 auf, die voneinander durch radial und diagonal verlaufende Streben 29 abgegrenzt sind. Im montierten Zustand gemäß Figur 1 ist das B-Lagerschild noch von einem inneren Lagerdeckel 30 im Zusammenhang mit einem Kugellager ergänzt. Gemäß Figuren 2-4 sind die im Beispiel vier Streben 29 jeweils von achsparallelen Befestigungsbohrungen 31 durchsetzt, die mit Befestigungsbohrungen 32 der Haube 2 (vgl. Figuren 8-10) fluchten und sich damit ergänzen. Zur Realisierung von Schutzarten IP23-54 sind die Luftdurchlässe 15 sowie der sich in entsprechenden, abgeschlossenen Luftkanälen fortsetzende Kühlluftstrom 20 durch Kreisinnenwandungen 33 vom sonstigen Maschineninneren 34 isoliert. Einem entsprechenden Zweck können auch gemäß Figur 1 Isolierelemente 35 in Form von beispielsweise Dichtflächen am Übergang von der stirnseitigen Hauben-Luftöffnung 22 zur zweiten Maschinen-Stirnseite 14 dienen.

Gemäß Figuren 8-10 ist eine für die Erfindung beispielhaft gezeichnete Haube 2 mit einer Außenkontur mit rechteckiger Grundform gestaltet, welche der Außenkontur bzw. dem Umriß des B-Lagerschilds 28 und auch der der sonstigen Maschine 1 mit gehäuselosem Blechpaket entspricht oder mit dieser deckungsgleich ist. Die Befestigungsbohrungen 32 der Haube 2 sind zumindest mit Teilabschnitten 32a in Haubenstreben 36 (vgl. Fig. 10) ausgebildet. Letztere erstrecken sich diagonal oder radial bezüglich der Haubenmittelachse 37 (deckungsgleich mit der Maschinen-Drehachse 38 gemäß Figur 1) von der Kanal-Außenwandung 17 zur kreisartig gekrümmten Kanal-Innenwandung 24. Sie durchsetzen dabei die stirnseitige Luftöffnung 22 zur zweiten Maschinen-Stirnseite 14 und tragen dabei vorteilhaft zu einer die Kühlung verstärkenden Luftverwirbelung bei. In einer gemeinsamen Flucht 39 mit den ersten Bohrungs-Teilabschnitten 32a liegen zweite Bohrungs-Teilabschnitte 32b, die vorzugsweise mit Innengewinde in einer Rückwandung 40 der rückwärtigen Haubenstirnseite 21 ausgebildet sind. Zur Montage der Haube 2 an die zweite Maschinen-Stirnseite 14 können dann (nicht gezeichnete) Befestigungsschrauben durch die beiden Teilabschnitte 32a, 32b der Hauben-Befestigungsbohrungen 32 und durch die fluchtenden Befestigungsbohrungen 31 des B-Lagerschilds 28 geführt werden. Wenn die Lagerdeckel-Befestigungsbohrungen 31 zumindest noch teilweise mit Innengewinde ausgestattet sind, läßt sich so manuell leicht und schnell eine Verschraubung des Lagerschilds 28 mit der Haube 2 vornehmen.

Gemäß Figur 9 besitzt die Haube 2 eine Grundform eines rohrartigen Anschlußstutzens, wobei die Rohrwandung von dem Ringkanal ..koaxial oder konzentrisch durchzogen ist. Ferner ist erkennbar, dass sich der Innenraum 25, gleichsam eine Bohrung für die Rückwand 40 bildend, von der rückwärtigen, freien Haubenstirnseite 21 frei bis zur entgegengesetzten Stirnseite fortsetzt, welche der zweiten Maschinen-Stirnseite 14 mit den ersten Bohrungs-Teilabschnitten 32a zugeordnet ist und einen Durchgang zu diesen bildet.

Gemäß Figur 11 in Verbindung mit Figur 9 ist die Lüfteröffnung 19 durch eine Aussparung 18 realisiert, welche auf einer Umfangsseite 41 der Hauben-Außenwandung 17 ausgebildet ist und letztere bis zum inneren Ringkanal 16 und dessen Innenwandung 24 hindurch durchsetzt. Darauf läßt sich der Lüfter 3 mit seinem Ein- oder Ausgang über beispielsweise Innengewindebohrungen 42, welche um die Aussparung 18 herum verteilt angeordnet sind, mittels Verschraubung befestigen.

### Bezugszeichenliste

- 1: elektrische Maschine
- 2: Haube
- 3: Radiallüfter
- 4: Lüftermotor
- 5: Luftfilter
- 6: Statorbleckpaket
- 7: Druckring
- 8: Rotor-Blechpaket
- 9: erste Maschinen-Stirnseite
- 10: A-Lagerschild
- 11: Abtriebswelle
- 12: Austrittsöffnungen (erste Luftdurchlässe)
- 13: Kiemenblech
- 14: zweite Maschinen-Stirnseite
- 15: Luftdurchlässe
- 16: Ringkanal
- 17: Außenmantel/Außenwandung
- 18: Aussparung
- 19: Lüfter-Öffnung
- 20: Kühlluftstrom
- 21: rückwärtige Haubenstirnseite
- 22: Luftöffnung, stirnseitig
- 23: Sacklochboden
- 24: Innenwandung
- 25: Innenraum
- 26: Geber
- 27: Geber-Anschlußdose
- 28: B-Lagerschild
- 29: Strebe
- 30: Lagerdeckel
- 31: Befestigungsbohrungen des B-Lagerschilds
- 32: Befestigungsbohrung der Haube
- 33: Kreisinnenwandung
- 34: Maschineninneres
- 35: Isolierelemente
- 32a: Bohrungs-Teilabschnitt
- 36: Haubenstrebe
- 37: Haubenmittelachse
- 38: Maschinendrehachse
- 39: gemeinsame Flucht
- 32b: zweiter Bohrungs-Teilabschnitt
- 40: Rückwand
- 41: Umfangsseite
- 42: Innengewindebohrungen
- 43: gegenüberliegende Haubenstirnseite

## Patentansprüche

1. Schutz- und Verbindungs-Haube (2) für eine Kühl-Anordnung einer elektrischen Maschine, mit einem Grundkörper (17,24,40), der einen Innenraum (25) oder Durchgang rohrartig mit einer Innenwand (24) umgibt, worin ein Kühlluft-Durch- oder Umleitungskanal (16) mit ringartigem Verlauf um eine eine gedachte Mittelachse (37) ausgebildet ist, **dadurch gekennzeichnet, dass** der Innenraum (25) durch die Innenwand (24) gegenüber dem Durch- oder Umleitungskanal (16) abgeschlossen ist, und der ringartig verlaufende Durch- oder Umleitungskanal (16) eine oder mehrere Öffnungen (22,19) sowohl stirnseitig als auch umfangsseitig jeweils zum Anschluß an externe Kühleinrichtungen aufweist, und der Grundkörper (17,24,40) mit einem oder mehreren manuell betätig- sowie lösbaren Befestigungsmitteln an eine elektrische Maschine (1) anbaubar ist.

2. Haube nach Anspruch 1, **dadurch gekennzeichnet, dass** die stimseitige(n) Öffnung(en) (22) zum Anschluß an einen oder mehrere Kühlluft-Durchlässe (15) der Maschine (1) und/oder die umfangsseitige(n) Öffnung(en) (19) zum Anschluß an einen Kühlluft-Ein- oder Ausgang eines Lüfters (3) für die elektrische Maschine (1) ausgebildet sind.

3. Haube nach Anspruch 1 oder 2, **dadurch gekennzeichnet, dass** innerhalb des Grundkörpers (17,24,40) ein ringartiger Hohlraum (16) ausgebildet ist, der jeweils auf einer der Maschine (1) zugeordneten Stirnseite (43) des Grundkörpers (17,14,43) und auf einem Umfangsabschnitt (41) offen ist, der einem Lüfter, vorzugsweise Radiallüfter (3) zugeordnet ist.

4. Haube nach einem der vorangehenden Ansprüche, **dadurch gekennzeichnet, dass** die stirnseitige Öffnung (22) des Umleitungskanals (16) im wesentlichen die Kontur oder den Querschnitt eines stirnseitig, axial oder achsparallel offenen Ringkanals (16) besitzt.

5. Haube nach einem der vorangehenden Ansprüche, **dadurch gekennzeichnet, dass** die stirnseitige Öffnung (22) des Umleitungskanals (16) von einer oder mehreren Streben (36) durchsetzt ist, die vorzugsweise radial oder diagonal von einer äußeren (17) zur inneren Kanalwandung (24) verlaufen.

6. Haube nach einem der vorangehenden Ansprüche, **dadurch gekennzeichnet, dass** die umfangsseitige Öffnung (19) für den Lüfter (3) mit wenigstens einer zum Umleitungskanal (16) durchgehenden Aussparung (18) in einer Umfangswandung oder Wandungsseite (41) des Grundkörpers (17,24,40) realisiert ist.

7. Haube nach einem der vorangehenden Ansprüche, **dadurch gekennzeichnet, dass** die Befestigungsmittel vorzugsweise verschraubbare Bohrungen (32,32a,32b) umfassen, die den Grundkörper (17,24,40) von einer Stirnseite (21) zur gegenüberliegenden (43) vorzugsweise achsparallel durchsetzen.

8. Haube nach Anspruch 5 und 7, **dadurch gekennzeichnet, dass** die Bohrungen (32,32a,32b) zumindest teilweise in den Streben (36) verlaufen oder angeordnet sind.

9. Haube nach einem der vorangehenden Ansprüche, **dadurch gekennzeichnet, dass** der Innenraum (25) wenigstens an einer der Maschine (1) abgewandten Hauben-Seite (21) oder-Wandung zur manuell freien Zugänglichkeit offen ist.

10. Haube nach Anspruch 9, **dadurch gekennzeichnet, dass** der Innenraum (25) der Haube (2) einen freien Durchgang für den manuellen Zugriff bis zur Wandung der zweiten Maschinen-Stirnseite (14) bildet.

11. Haube nach einem der vorangehenden Ansprüche, **dadurch gekennzeichnet, dass** die Haube (2) und/oder dessen Umleitungskanal (16) eine Grundform beziehungsweise einen Verlauf zumindest teilweise koaxial und/oder konzentrisch zur Maschinendrehachse (3 8) zwecks einer zentrierten Anbringung aufweist.

12. Haube nach einem der vorangehenden Ansprüche, **dadurch gekennzeichnet, dass** zur Bildung der Lüfter-Öffnung (19) des Umleitungskanals (16) die Haube (2) in einer vorzugsweise koaxialen, konzentrischen oder achsparallelen Umfangswandung (17) eine Aussparung (18) aufweist, auf die der Lüfter (3) mit seinem Kühlluft-Eingang oder -ausgang vorzugsweise radial aufgesetzt und vorzugsweise lösbar befestigbar ist.

## Claims

1. Protection and connection flange (2) for a cooling arrangement in an electrical machine, with a base body (17, 24, 40) surrounding an inner chamber (25) or passage in the way of a pipe, with an inside wall (24), whereby a cooling air through or diversion channel (16) with an annular expansion is formed around an imagined central axis (37), **characterised in that** the inner chamber (25) is closed off by the inside wall (24) from the through or diversion channel (16), and **in that** the annularly expanding through or diversion channel (16) comprises one or more openings (22, 19) on the facing side as well as the circumference, each for connecting to an external cooling means, and **in that** the base body (17, 24, 40) can be fitted to an electrical machine (1) with one or more manually activated as well as disconnectable fitting means.

2. Flange according to Claim 1, **characterised in that** opening(s) (22) for connecting one or more cooling air passages (15) of the machine (1) and/or the circumferential opening(s) (19) for connecting a cooling air inlet or outlet of a ventilator (3) for the electrical machine (1) are formed on the facing side.

3. Flange according to Claim 1 or 2, **characterised in that** an annular hollow space (16) is formed inside the base body (17, 24, 40), which is associated with a facing side (43) of the base body (17, 14, 43) associated with the machine (1) and is open along a circumference section (41) and associated with a ventilator, preferably a radial ventilator (3).

4. Flange according to one of the preceding Claims, **characterised in that** the facing side opening (22) of the diversion channel (16) substantially comprises the contours or the cross-section of a facing side axial or axis parallel open annular channel (16).

5. Flange according to one of the preceding Claims, **characterised in that** the facing side opening (22) of the diversion channel (16) is penetrated by one or more struts (36), which preferably extend radially or diagonally from an outside (17) to an inside channel wall (24).

6. Flange according to one of the preceding Claims, **characterised in that** the circumference side opening (19) for the ventilator (3) is realised with at least one recess (18) through the diversion channel (16) in a circumference wall or wall side (41) of the base body (17, 24, 40).

7. Flange according to one of the preceding Claims, **characterised in that** the fitting means preferably include threaded bores (32, 32a, 32b), which penetrate the base body (17, 24, 40) in an axis parallel way from one facing side (21) to the opposite (43).

8. Flange according to Claim 5 and 7, **characterised in that** the bores (32, 32a, 32b) extend or are located at least in part along or in the struts (36).

9. Flange according to one of the preceding Claims, **characterised in that** the inner chamber (25) is open for manual access at least on one flange side (21) or wall facing away from the machine (1).

10. Flange according to Claim 9, **characterised in that** the inner chamber (25) of the flange (2) forms a free passage for manual access up to the wall of the second machine facing side (14).

11. Flange according to one of the preceding Claims, **characterised in that** the flange (2) and/or its diversion channel (16) comprise a basic shape, e.g. an expansion that is at least in part coaxial and/or concentric in relation to the machine rotation axis (38) for a centred installation.

12. Flange according to one of the preceding Claims, **characterised in that** the flange (2) comprises a recess (18) in a preferably coaxial, concentric or axis parallel circumference wall (17) for forming the ventilator opening (19) of the diversion channel (16), to which the ventilator (3) with its cooling air inlet or outlet is preferably radially and preferably disconnectably affixed.

## Revendications

1. Capot (2) de protection et de connexion pour un dispositif de refroidissement d'une machine électrique, comprenant un corps de base (17, 24, 40) qui entoure un espace intérieur (25) ou un passage tubulaire avec une paroi intérieure (24), dans lequel un canal (16) de passage ou de déviation d'air de refroidissement est réalisé avec une conformation annulaire autour d'un axe médian (37) virtuel, **caractérisé en ce que** l'espace intérieur (25) est fermé par la paroi intérieure (24) vis à vis du canal de passage (16) ou de déviation, **en ce que** le canal (16) de passage ou de déviation réalisé avec une conformation annulaire présente une ou plusieurs ouvertures (22, 19), aussi bien du côté frontal qu'également du coté périphérique, respectivement pour la connexion avec des dispositifs de refroidissement externes, et **en ce que** le corps de base (17, 24, 40) peut être monté sur une machine électrique (1), à l'aide d'un ou de plusieurs moyens de fixation actionnables et démontables manuellement.

2. Capot selon la revendication 1, **caractérisé en ce que** l'ouverture/les ouvertures (22) frontales est/sont réalisée(s) pour la connexion avec un ou plusieurs passages (15) d'air de refroidissement de la machine (1) et/ou **en ce que** l'ouverture/les ouvertures périphérique(s) est/sont réalisée(s) pour la connexion avec une entrée ou sortie de l'air de refroidissement d'un ventilateur (3) pour la machine électrique (1).

3. Capot selon la revendication 1 ou 2, **caractérisé en ce que**, à l'intérieur du corps de base (17, 24, 40), est pratiquée une cavité (16) annulaire qui est ouverte respectivement sur l'un des côtés frontaux (43), associé à la machine (1), du corps de base (17, 14, 43) et sur une section périphérique (41) qui est associée à un ventilateur, de préférence un ventilateur radial (3).

4. Capot selon l'une des revendications précédentes, **caractérisé en ce que** l'ouverture (22) frontale du canal de déviation (16) présente sensiblement le contour ou la section transversale d'un canal annulaire (16) ouvert côté frontal, axialement ou parallèlement à l'axe.

5. Capot selon l'une des revendications précédentes, **caractérisé en ce que** l'ouverture (22) frontale du canal de déviation (16) est traversée par un ou plusieurs supports (36) qui passent, de préférence radialement ou en diagonale, d'une paroi de canal (24) extérieure à la paroi de canal intérieure.

6. Capot selon l'une des revendications précédentes, **caractérisé en ce que** l'ouverture (19) périphérique pour le ventilateur (3) est réalisée avec au moins un évidement (18) traversant vers le canal de déviation (16), dans une paroi périphérique ou un côté de paroi (41) du corps de base (17, 24, 40).

7. Capot selon l'une des revendications précédentes, **caractérisé en ce que** les moyens de fixation comprennent de préférence des alésages (32, 32a, 32b) filetés qui traversent, de préférence parallèlement à l'axe, le corps de base (17, 24, 40), du côté frontal (21) au côté opposé (43).

8. Capot selon les revendications 5 et 7, **caractérisé en ce que** les alésages (32, 32a, 32b) passent ou sont disposés au moins en partie dans les supports (36).

9. Capot selon l'une des revendications précédentes, **caractérisé en ce que** l'espace intérieur (25) est ouvert, au moins sur l'un des côtés (21) de capot opposé à la machine (1) ou sur l'une des parois de capot opposée à la machine (1), afin d'être librement accessible manuellement.

10. Capot selon la revendication 9, **caractérisé en ce que** l'espace intérieur (25) du capot (2) forme un passage libre pour l'accès manuel jusqu'à la paroi du deuxième côté frontal (14) de la machine.

11. Capot selon l'une des revendications précédentes, **caractérisé en ce que** le capot (2) et/ou son canal de déviation (16) présente une forme de base ou un tracé au moins en partie coaxial et/ou concentrique à l'axe de rotation (38) de la machine en vue d'un positionnement centré.

12. Capot selon l'une des revendications précédentes, **caractérisé en ce que**, pour la réalisation de l'ouverture (19) du ventilateur, du canal de déviation (16), le capot (2) présente, dans une paroi périphérique (17) de préférence coaxiale, concentrique ou parallèle à l'axe, un évidement (18) sur lequel le ventilateur (3) est mis en place, de préférence radialement, avec son entrée ou sa sortie d'air de refroidissement et peut être fixé de préférence de manière amovible.
